# FASCICULE DE BREVET EUROPEEN

(11) **EP 1 308 374 B1**
(45) Date de publication et mention de la délivrance du brevet: **28.12.2005**
(21) Numéro de dépôt: 02292715.6
(22) Date de dépôt: 30.10.2002
(51) Int. Cl.: B62D 25/14

(54) **Procédé pour réaliser deux planches de bord utilisant deux structures aerauliques**
Verfahren zur Herstellung von zwei Armaturenbrettern durch Benutzung von zwei Luftschläuchen
Method for producing two dashboards using two ventilation hoses

(30) Priorité: 31.10.2001 FR 0114128
(43) Date de publication de la demande: 07.05.2003
(73) Titulaire: Faurecia Interieur Industrie, 92000 Nanterre (FR)
(72) Inventeur: Brancheriau, Christian, 2, rue Emile Zola, 60110 Meru (FR); Duchez, David, c/o Faurecia Interieur Industrie, 60110 Meru (FR)
(74) Mandataire: Lerner, François

(56) Documents cités:
- DE-A- 3 510 336
- FR-A- 2 805 777
- US-B1- 6 273 495

## Description

L'invention se rapporte à la réalisation de planches de bord destinées à équiper l'habitacle intérieur de véhicules automobiles.

Les planches de bord sont des pièces maîtresses des véhicules automobiles. Elles sont typiquement fixées au bâti structurel (autrement dénommé "caisse") de ces véhicules.

Un problème qui se pose est celui de la polyvalence des planches de bord, c'est-à-dire de la possibilité d'utiliser tout ou partie de ces planches de bord sur différents types de véhicules, avec par exemple des parties communes entre des véhicules "type berline" et des véhicules "type monospace".

Dans ce contexte général, l'invention s'est en particulier attachée à traiter le problème du raccordement entre les structures aérauliques des planches de bord (autrement dénommées "conduits d'air") et les aérateurs situés en façade.

Pour faciliter la fabrication de telles zones de planches de bord, il a déjà été proposé dans FR-A-2 763 287 une solution améliorant le positionnement d'un conduit d'air pour faciliter son raccordement avec un aérateur.

Utiliser des conduits au moins localement souples (c'est-à-dire flexibles, déformables) a par ailleurs été proposé. Ainsi dans FR-A-2 771 054, est-il proposé différents moyens pour maintenir un conduit souple en vue de son assemblage.

En outre il a été proposeé une canalisation d'air entre un dispositif d'alimentation en air et au moins un aérateur d'un véhicule terrestre à moteur avec le document FR-A-2 805 777, dont l'exposé couvre les particularités du préambule de la revendication 1.

Un problème qui demeure malgré tout posé est celui d'une polyvalence plus importante entre les éléments de planches de bord permettant de limiter le nombre de pièces à concevoir, à fabriquer et à assembler tout en facilitant les opérations d'assemblage entre les conduits d'air (structures aérauliques) et les aérateurs, ceci pour différents types de véhicules.

Une solution fournie par l'invention consiste en un procédé pour réaliser deux planches de bord utilisant deux structures aérauliques (au moins en partie) communes, comprenant les étapes suivantes :
a) réaliser une première et une deuxième structures aérauliques, comprenant chacune une (des) portion(s) de conduit (s) souple(s) identiques entre les structures aérauliques,
b) réaliser une première coiffe de planche de bord présentant un (des) premier(s) aérateur(s) et une deuxième coiffe de planche de bord différente de la première et présentant un (des) second(s) aérateur(s) (éventuellement seuls certains aérateurs pourraient être différents d'une coiffe à l'autre, en termes de position et/ou forme et/ou dimensions, etc ..., les coiffes étant dans cette hypothèse identiques par ailleurs), caractérisé en ce qu'il comprend en outre les étapes suivantes :
c) établir dans une position d'assemblage la (les) portion(s) de conduit(s) souple(s) de la première structure aéraulique par l'intermédiaire de premiers moyens de positionnement et assembler ladite (lesdites) portion(s) de conduit(s) souple(s) de la première structure aéraulique et le(s) premier(s) aérateur(s),
d) établir en position d'assemblage la (les) portion(s) de conduit(s) souple(s) de la deuxième structure aéraulique par l'intermédiaire de deuxièmes moyens de positionnement distincts des premiers et assembler ladite (lesdites) portion(s) de conduit(s) souple(s) de la deuxième structure aéraulique et le (les) deuxième(s) aérateur(s).

Avec cette solution, on facilite les opérations d'assemblage et on réduit les coûts.

Toujours dans le même but de polyvalence, on disposera avantageusement lesdits premier et deuxième moyens de positionnement sur une première et une seconde pattes, respectivement, lesquelles pourront d'ailleurs chacune être pourvues desdits premiers et des seconds moyens de positionnement. En particulier, ces première et seconde pattes pourront être identiques.

Pour encore favoriser l'intégration des pièces dans une structure commune, une autre caractéristique de l'invention conseille que lors de l'étape a), on réalise une première et une seconde structures aérauliques identiques et, de préférence, la (les) portion(s) de conduit(s) souple(s) est (sont) raccordée(s) à la première et/ou à la deuxième structure(s) aéraulique(s) par l'intermédiaire d'un raccord rigide, consécutivement à une étape de surmoulage, ou de co-moulage dans un même moule, des structures aérauliques avec les portions de conduits souples.

Ainsi, on pourra diminuer les temps d'assemblage en évitant aux opérateurs d'avoir parfois à intervenir dans des endroits d'accès difficile.

En tant qu'alternative ou complément à la caractéristique qui précède, d'autres aspects de l'invention proposent :
- de monter la (les) portions de conduit(s) souple(s) sur rotule par rapport à la zone de raccordement à la première et/ou à la seconde structure aéraulique,
- lors de l'étape a), d'utiliser des portions de conduit(s) souple(s) présentant une zone déformable à la fois en allongement et en orientation angulaire,
- et/ou de mouler en une seule pièce l'une au moins des première et seconde pattes avec la première et/ou la deuxième structure(s) aéraulique(s).

Là encore, on peut limiter les temps et éventuelles difficultés d'assemblage.

Encore une fois pour proposer une solution augmentant la polyvalence, ou multi-applications à des types de véhicules différents, d'une partie notable de planche de bord, une autre caractéristique de l'invention propose, pour deux véhicules différents :
- de réaliser un premier et un second corps de planche de bord différents l'un de l'autre, adaptés pour recevoir, fixées par-dessus eux, respectivement les première et seconde coiffes, lesquelles sont destinées à être disposées en façade de l'habitacle,
- lors de l'étape a) précitée, de réaliser les première et seconde structures aérauliques pour qu'elles présentent chacune des zones identiques de fixation autorisant une fixation indifféremment auxdits premier et second corps de planche de bord,
- de fixer les première et seconde structures aérauliques respectivement aux premier et second corps de planche de bord, à l'endroit de certaines au moins desdites zones de fixation,
- puis de fixer chaque assemblage des premier et second corps de planche de bord et des structures aérauliques, respectivement aux première et seconde coiffes, ainsi qu'à la caisse de chaque véhicule.

Une description encore plus détaillée de l'invention va maintenant être fournie en relation avec les dessins annexés dans lesquels :
- les figures 1 et 4 correspondent chacune à une coupe transversale d'une planche de bord, à l'endroit d'un aérateur, pour des véhicules respectivement type berline et type monospace,
- la figure 2 est une vue schématique partielle en perspective de la planche de bord de la figure 1 installée dans l'habitacle d'un véhicule type berline,
- la figure 3 montre une caisse de véhicule de type berline,
- la figure 5 montre une patte pourvue à la fois de premier et de second moyens de positionnement de portions de conduits souples,
- la figure 6 montre une articulation à rotule sur le conduit souple,
- et la figure 7 montre schématiquement une caisse de véhicule de type monospace.

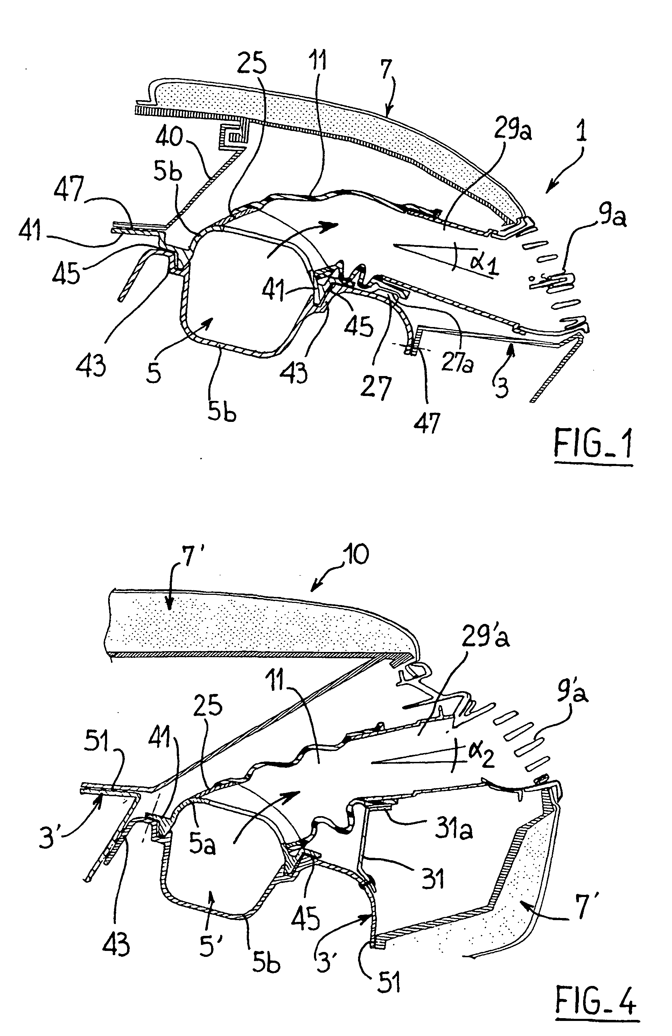

Sur la figure 1, on voit une section de planche de bord repérée dans son ensemble 1.

La partie illustrée de cette planche de bord montre que cette dernière comprend un corps structurel de planche de bord 3, une structure aéraulique 5, une coiffe 7 équipée d'un aérateur 9a. Une portion de conduit souple 11 relie l'aérateur 9a à une structure aéraulique (assimilée ici au conduit principal de diffusion d'air 5).

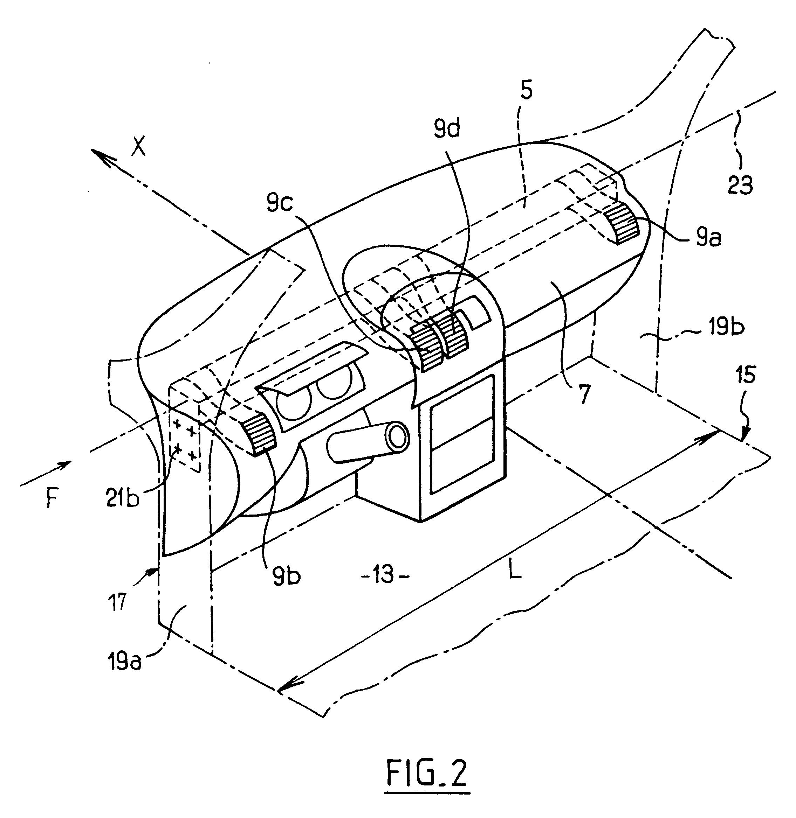

Comme le montre la figure 2, la planche de bord 1 est destinée à équiper l'habitacle intérieur 13 d'un véhicule automobile 15.

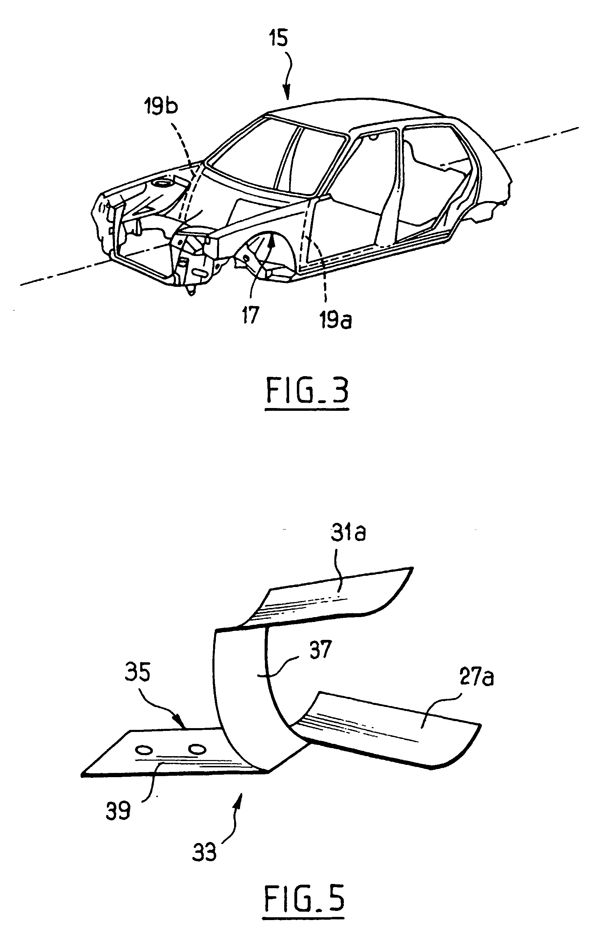

La figure 3 montre que le véhicule 15 comprend une caisse structurelle 17 comprenant en particulier deux piliers A, 19a, 19b (voir également figure 2) auxquels la planche de bord 1 est fixée latéralement (à ses extrémités longitudinales) par les moyens de fixation tels que repérés 21b sur la figure 2 (soudure, vissage, ...).

Dans la solution illustrée figure 2, le conduit principal d'air 5 constitue une pièce structurelle pour le véhicule, typiquement dénommée "traverse" (cross beam), cette pièce 5 en forme de caisson creux participant à la structuration mécanique du véhicule en concentrant sur elle, et, en absorbant par une déformation contrôlée, une partie des efforts consécutifs à un choc frontal ou à un choc latéral correspondant par exemple à un effort F dans le sens de l'axe longitudinal 23, comme sur la figure 2 (lequel axe est perpendiculaire à la direction d'avance X du véhicule, lorsque la planche de bord est montée sur ce véhicule).

A noter que les fixations (telles que 21b) entre la planche de bord 1 et la caisse du véhicule concerné (en l'espèce, piliers A, 19a, 19b) pourront s'effectuer par l'intermédiaire de pattes de fixation liées au corps de planche de bord 3 et/ou au conduit d'air 5 (à cet égard, l'utilisation de pattes de liaison telles que référencées 5, 63a, 63b, 140, 142 ou 156 dans EP-A-1 063 151 peut être prévue). Les extrémités fermées d'un conduit d'air mécaniquement structurant, tel que le conduit d'air 5, peuvent également être pourvues (ou reliées à) de(s) pattes de fixation entre l'assemblage 3, 5 et la caisse du véhicule. Dans la solution de la figure 2, les moyens de fixation 21b relient la caisse 17 au corps 3 de planche de bord.

Au-delà de ces questions d'assemblage, les figures 1 et 4 illustrent ensemble une caractéristique importante de l'invention qui permet de réaliser deux planches de bord 1, 10, utilisant deux corps ici différents (3, 3') de planche de bord, deux structures aérauliques qui peuvent être identiques, reliées à des aérateurs 9a, 9'a différents (dans leurs formes, emplacements, inclinaisons ... ou autres), par l'intermédiaire de deux portions de conduits souples identiques 11 liés au conduit d'air concerné 5 (ou 5').

Sur la figure 1, on a schématisé une portion de planche de bord 1 pour un véhicule type berline.

Sur la figure 4, il s'agit d'une planche de bord 10 pour un monospace.

Les coiffes 7 et 7' pour ces deux types de planches de bord sont dans l'exemple différentes, au moins quant à leur forme à proximité des aérateurs illustrés, 9a, 9'a.

L'aérateur 9a est situé plus bas sur la coiffe 7 que ne l'est l'aérateur 9'a sur la coiffe 7'.

La position angulaire du canal de raccordement, respectivement 29a et 29'a, des aérateurs 9a et 9'a, est également différente dans les deux cas (angle α₁ sur la figure 1 et α₂ sur la figure 4), de même que la distance entre l'extrémité libre de raccordement de chacun des canaux 29a, 29'a et le conduit d'air.

C'est d'ailleurs pourquoi les portions de conduit souple 11 sont avantageusement réalisées en un matériau flexible, déformable, de préférence tant en allongement qu'en orientation angulaire.

L'utilisation de tronçons de conduit 11 plissés, avec par exemple des plis en accordéon, et réalisés en polypropylène peut s'avérer favorable.

Du côté du conduit d'air 5 (ou 5'), le raccordement entre la portion souple 11 et ce conduit s'effectue par l'intermédiaire d'un embout en plastique rigide 25 qui fait localement saillie du conduit et auquel une extrémité de la portion 11 est liée.

En pratique, une bague serrée ou tout moyen de fixation pourra maintenir les zones 11 et 25 liées ensemble.

Une alternative intéressante, qui peut être génératrice d'économies au moins en termes d'assemblage, peut être trouvée dans l'utilisation d'une technique de surmoulage, ou d'injection bimatière en co-moulage dans un même moule, des deux pièces 5 (ou 5') et 11.

Dans le cas du surmoulage, une fois la structure aéraulique moulée, on vient apporter (typiquement injecter) dans une autre cavité du même moule, ou dans un autre moule, une quantité appropriée de matière autour de l'embout rigide 25 formé, de manière que la matière plastique de la pièce 11 et celle du tronçon 25 se soudent l'une avec l'autre, permettant ainsi d'obtenir un ensemble comprenant un ou plusieurs tronçons de conduit souple 11 intégré(s) de matière avec une structure aéraulique 5.

Dans le cas du co-moulage, les deux flux de matières devant constituer les pièces 5 (ou 5') et 11 sont injectés dans le même moule, chacun typiquement alors que l'autre matière n'est pas encore refroidie, de sorte que les matières refroidissent ensemble.

Pour placer l'extrémité de raccordement de chaque portion de conduit souple 11 dans une position appropriée de montage en regard de l'extrémité du canal de raccordement 29a, 29'a concerné de l'aérateur, on voit sur les figures 1 et 4 que l'on utilise une patte, respectivement 27, 31, pourvue dans chaque cas d'au moins un moyen de positionnement, respectivement 27a, 31a, permettant de venir établir la portion de conduit souple dans sa position appropriée.

Sur les figures 1 et 4, les pattes 27, 31 sont fixées aux corps de planches de bord 3, 3' (vissage, soudage, rivetage, ...). La patte 27 présente une forme beaucoup plus aplatie que la patte 31 qui se dresse nettement au-dessus du corps de planche de bord et du conduit d'air.

Les pattes auraient également pu être fabriquées en même temps que les conduits d'air et donc formées avec eux, d'une seule pièce, par moulage.

Un avantage réside alors dans l'abandon d'une étape d'assemblage et dans un prépositionnement possible dans le moule de la portion de conduit souple correspondante qui pourrait être directement placée dans une position opérationnelle.

Les moyens de positionnement 27a, 31a des pattes pourront en particulier consister en des plaques ou berceaux de soutien, voire en des bagues ou des portions de bagues. Des moyens complémentaires de serrage ou de fixation pourront être adjoints (non représentés).

Sur la figure 5, on voit une variante de réalisation d'une patte d'assemblage repérée 33 que l'on pourrait substituer aux pattes précédentes, tant 27 que 31. On aurait ainsi, pour les deux types différents de planches de bord, telles que 1 et 10, deux pattes 33 distinctes mais identiques.

La patte 33 comprend plusieurs (en l'espèce, deux) berceaux d'appui qui peuvent être strictement identiques aux plateaux 27a, 31a, en forme, dimensions, position et orientation (on leur a d'ailleurs attribué les mêmes repères), avec la particularité que ces deux surfaces de positionnement sont liées à un corps commun 35 comprenant une portion dressée 37 et une surface de fixation 39 destinée à la liaison de la patte 33 avec le corps de planche de bord et/ou la structure aéraulique concernée (3,3' ou 5,5').

La pièce 33 peut être une pièce métallique ou en matière plastique rigide.

Suivant le cas, une fois la pièce 33 installée, une portion de conduit souple 11 viendra reposer soit sur le plateau 31a, en position haute (à l'image de la solution envisagée sur la figure 4), soit sur le plateau inférieur 27a, en position basse (à l'image de ce qui est illustré sur la figure 1).

Concernant la structure aéraulique 5 (ou 5') et le corps de planche de bord 3, on notera encore ce qui suit :

Chaque structure aéraulique pourra être constituée en deux parties chacune en forme de demi-coquille, 5a, 5b, reliées ensemble latéralement à l'endroit de rebords extérieurs longitudinaux 41, 43, où les deux demi-coquilles pourront être, par exemple, soudées ensemble par vibrations. En plusieurs endroits répartis axialement le long du conduit 5 (ou 5'), celui-ci présentera en outre extérieurement des zones de fixation, telles que 45 sur les figures 1 et 4, qui seront donc avantageusement identiques pour toutes les structures aérauliques, de manière à autoriser une fixation indifféremment aux différents corps de planches, tels que 3 et 3'.

La structure aéraulique sera alors commune dans son ensemble (conduit principal 5 plus portion(s) souple(s) 11 au moins) à plusieurs types de corps de planches de bord, comme à plusieurs types de coiffes 7, 7'.

Au demeurant, les conduits principaux 5, 5' auraient pu être strictement identiques (ce qu'ils seront certainement dans la pratique), les différences entre eux sur les figures 1 et 4 ayant pour objet de montrer qu'un tel conduit principal peut être indifféremment fixé à la coiffe (figure 1, via la patte rigide 40) ou au corps de planche de bord (3', fixation par la branche 43 sur la figure 4).

Par ailleurs, ce pourra être la structure aéraulique ou le corps de planche de bord qui portera des moyens de fixation pour une liaison entre l'ensemble pré-assemblé corps de planche de bord/structure aéraulique et la coiffe concernée.

Sur la figure 1, c'est le rebord extérieur 41 de la structure aéraulique qui porte des moyens de fixation avec la coiffe 7 (en 47), tandis que sur la figure 4, c'est le corps 3' de planche de bord qui porte les moyens de fixation 51 avec la coiffe 7'.

Bien entendu, d'autres zones de fixation que 47 et 51 entre la coiffe et l'ensemble structure aéraulique/corps de planche de bord auront été prévues.

En termes d'étapes principales d'assemblage, on peut noter ce qui suit :

Les corps de planches de bord et les conduits aérauliques sont de préférence fabriqués indépendamment les uns des autres. Les coiffes sont de toutes façons fabriquées à part.

Les portions de conduit souple 11 commun aux différentes structures aérauliques peuvent être fabriquées en même temps que ces dernières, de moulage avec elles. Non seulement on peut fabriquer de telles structures avec un (des) conduit(s) souple(s) 11 identique(s) d'une structure aéraulique à l'autre, mais on conseille de fabriquer des structures aérauliques elles-mêmes globalement identiques (au moins quant au conduit principal tel que 5 et aux portions souples 11) pour au moins deux types différents de planches de bord.

Les pattes de positionnement 27,31 (ou la patte unique commune 33) sont de préférence rapportées et fixées à proximité de la structure aéraulique concernée, soit à celle-ci, soit à une zone adjacente du corps de planche de bord, de préférence après fixation (si nécessaire) entre elles des pièces 3 et 5 ou 3' et 5, avec alors avantageusement prévision de zones identiques de fixation ayant réellement permis de n'utiliser qu'une seule structure aéraulique 5 pour différents types de corps de planches de bord tels que 3 et 3'.

Après cela, alors que chaque conduit souple 11 est dans sa position opérationnelle, soutenu par le moyen de positionnement adapté de la patte, on vient placer par-dessus cet ensemble la coiffe appropriée, telle que 7 ou 7', en emmanchant l'extrémité libre du canal de raccordement (tel que 29a ou 29'a) de chaque aérateur dans l'extrémité libre ouverte du conduit 11 correspondant, après quoi l'assemblage corps de planche de bord/structure aéraulique est fixé, en différents endroits, à la coiffe et ensuite à la caisse 17 du véhicule concerné.

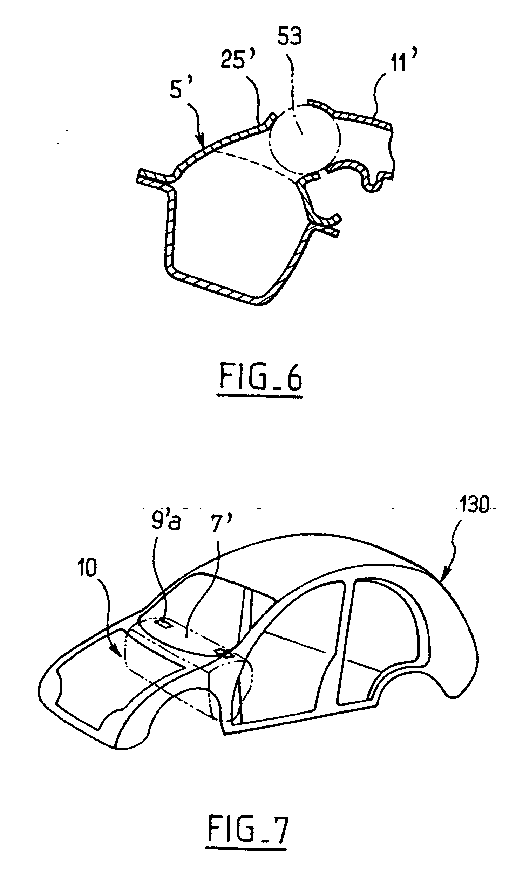

A cet égard, la planche de bord 10 de la figure 4 sera de préférence assemblée à un véhicule "type monospace" de la figure 7 tandis que la planche 1 de la figure 1 sera de préférence assemblée avec une caisse de véhicule de type " berline " comme sur la figure 3.

Il n'en demeure pas moins que d'autres catégories de véhicules peuvent être concernées.

Pour éviter toute ambiguïté, on indique que l'on a appelé ci-avant "coiffe" toute partie de planche de bord qui constitue la façade extérieure de la planche, en particulier en partie haute de celle-ci, toute coiffe ayant un revêtement extérieur décoratif (cuir, tissu, plastique, ...) faisant face à l'habitacle, le "corps de planche de bord" étant une pièce structurelle, ou un assemblage de pièces, comprenant des pièces plastiques rigides ayant une fonction de support de la planche de bord et à laquelle (auquel) est typiquement fixé le bloc de ventilation ou de climatisation et/ou le combiné porte-instruments situé face au conducteur, derrière le volant.

Quant aux "structures aérauliques" précitées, elles comprennent en particulier un conduit principal de diffusion d'air s'étendant globalement sur l'essentiel au moins de la largeur L de l'habitacle (figure 2) globalement suivant l'axe transversal 23, pour assurer la circulation et a priori la répartition de l'air provenant du bloc de ventilation/climatisation vers les aérateurs, en l'espèce aérateurs latéraux gauche et droit 9a, 9b, et centraux 9c, 9d, ce conduit principal de diffusion d'air pouvant (comme indiqué ci-avant) avoir aussi une fonction de poutre transversale, à l'image de ce qui est expliqué dans EP-A-1 063 151 (concernant la poutre 124 ; voir en particulier colonne 11, ligne 33 à colonne 12, ligne 57).

Quand on parle de "structures aérauliques" communes, on parle donc au moins de "conduit principal de diffusion d'air", tel que 5, et de "tronçon(s) de conduit souple 11 communs (identiques) à plusieurs types (différents) de planches de bord.

Sur la figure 6, le raccordement entre le tronçon de conduit souple 11' illustré et le conduit 5' est pourvu d'une rotule schématisée en 53, favorisant l'articulation et donc la position angulaire du tronçon 11. La rotule 53 peut être prévue sur le raccord rigide 25' ou sur le tronçon souple 11'.

Sur la figure 7, une carcasse (châssis) 130 de monospace est pourvue de la planche de bord 10 de la figure 4, avec la coiffe d'habillage 7' et un aérateur repéré 9'a.

## Revendications

1. Procédé pour réaliser deux planches (1, 10) de bord utilisant deux structures aérauliques (5, 5') au moins en partie communes, comprenant les étapes suivantes :
a) réaliser une première (5) et une deuxième (5') structures aérauliques, comprenant chacune une (des) portion(s) de conduit (s) souple(s) (11) identiques d'une structure aéraulique à l'autre,
b) réaliser une première coiffe (7) de planche de bord présentant un (des) premier(s) aérateur(s) (9a) et une deuxième coiffe (7') de planche de bord différente de la première et présentant un (des) second(s) aérateur(s) (9'a), **caracterisé en ce qu'**il comprend en outre les étapes suivantes :
c) établir dans une position d'assemblage la (les) portion(s) de conduit(s) souple(s) (11) de la première structure aéraulique par l'intermédiaire de premiers moyens de positionnement (27a) et assembler ladite (lesdites) portion(s) de conduit(s) souple(s) (11) de la première structure aéraulique (5) et le(s) premier(s) aérateur(s) (9a),
d) établir en position d'assemblage la (les) portion(s) de conduit(s) souple(s) (11) de la deuxième structure aéraulique par l'intermédiaire de deuxièmes moyens de positionnement (31a) distincts des premiers et assembler ladite (lesdites) portion(s) de conduit(s) souple(s) de la deuxième structure aéraulique et le (les) deuxième(s) aérateur(s) (9a, 9'a).

2. Procédé selon la revendication 1, **caractérisé en ce que** pour établir en position la (les) portion(s) de conduit(s) souple(s) lors des étapes c) et d) :
- on dispose les premier et les second moyens de positionnement (27a, 31a) respectivement sur une première patte (27, 33) et sur une deuxième patte (31, 33),
- et on utilise, en tant que première et seconde pattes, des première et seconde pattes identiques (33) pourvues chacune desdits premier et second moyens de positionnement (27a, 31a).

3. Procédé selon la revendication 1 ou la revendication 2, **caractérisé en ce que** lors de l'étape a), on réalise une première et une seconde structures aérauliques identiques et, de préférence, la (les) portion(s) de conduit(s) souple(s) est (sont) raccordée(s) à la première et/ou à la deuxième structure(s) aéraulique(s) par l'intermédiaire d'un raccord rigide (25), consécutivement à une étape de surmoulage, ou de co-moulage dans un même moule, des structures aérauliques avec les portions de conduits souples.

4. Procédé selon la revendication 1 ou la revendication 2, **caractérisé en ce que** la (les) portion(s) de conduit(s) souple(s) (11) est (sont) reliée(s) à la première et/ou à la deuxième structure aéraulique (15, 5') par l'intermédiaire d'une rotule (53).

5. Procédé selon l'une quelconque des revendications précédentes, **caractérisé en ce que** lors de l'étape a), on utilise des portions de conduit(s) souple(s) (11) présentant une zone déformable à la fois en allongement et en orientation angulaire.

6. Procédé selon l'une quelconque des revendications précédentes, **caractérisé en ce que** :
- on dispose les premier et les second moyens de positionnement (27a, 31a) respectivement sur une première patte (27,33) et sur une seconde patte (31, 33),
- et l'une au moins des première et seconde pattes (27, 31 ; 33) est réalisée de moulage, en une seule pièce, avec la première et/ou la deuxième structure(s) aéraulique(s).

7. Procédé selon l'une quelconque des revendications précédentes, **caractérisé en ce que** lesdites planches de bord étant destinées à équiper l'habitacle intérieur de deux véhicules automobiles différents, comprenant chacun une caisse (17, 130),
on réalise un premier et un second corps de planche de bord (1, 10) différents l'un de l'autre, adaptés pour recevoir, fixées par-dessus eux, respectivement les première et seconde coiffes (7, 7'), lesquelles sont destinées à être disposées en façade de l'habitacle (13),
lors de l'étape a) on réalise les première et seconde structures aérauliques (5, 5') pour qu'elles présentent chacune des zones identiques de fixation (45) autorisant une fixation indifféremment auxdits premier et second corps de planche de bord (3, 3'),
on fixe les première et seconde structures aérauliques (5, 5') respectivement aux premier et second corps de planche de bord, à l'endroit de certaines au moins desdites zones de fixation (45),
puis on fixe chaque assemblage des premier et second corps de planche de bord et des structures aérauliques, respectivement aux première et seconde coiffes (7, 7'), ainsi qu'à la caisse (17, 130) de chaque véhicule.

## Patentansprüche

1. Verfahren zur Herstellung von zwei Armaturenbrettern (1, 10) unter Verwendung von zwei mindestens teilweise gemeinsamen Luftschläuchen (5, 5'), mit den folgenden Schritten:
a) Realisieren eines ersten (5) und eines zweiten (5') Luftschlauches, die jeweils einen elastischen Leitungsteil (elastische Leitungsteile) (11) aufweisen, die beiden Luftschläuchen identisch sind,
b) Herstellen einer ersten Armaturenbretthaube (7), welche einen ersten Belüfter (erste Belüfter) (9a) aufweist und einer zweiten Armaturenbretthaube (7'), die sich von der ersten unterscheidet und einen zweiten Belüfter (zweite Belüfter) (9'a) aufweist, **dadurch gekennzeichnet, daß** es ferner die folgenden Schritte aufweist:
c) Aufstellen des elastischen Leitungsteils (der elastischen Leitungsteile) (11) des ersten Luftschlauches in eine Zusammenbauposition mittels erster Positionierungsmittel (27a) und Zusammenbauen des elastischen Leitungsteils (der elastischen Leitungsteile) (11) des ersten Luftschlauches (5) und des ersten Belüfters (der ersten Belüfter) (9a),
d) Aufstellen des elastischen Leitungsteils (der elastischen Leitungsteile) (11) des zweiten Luftschlauches in Zusammenbauposition mittels zweiter Positionierungsmittel (31a), die sich von den ersten unterscheiden, und Zusammenbauen des elastischen Leitungsteils (der elastischen Leitungsteile) des zweiten Luftschlauches und des zweiten Belüfters (der zweiten Belüfter) (9a, 9'a).

2. Verfahren nach Anspruch 1, **dadurch gekennzeichnet, daß** man zum Aufstellen des elastischen Leitungsteils (der elastischen Leitungsteile) in Position während der Schritte c) und d):
- die ersten bzw. zweiten Positionierungsmittel (27a, 31 a) auf einer ersten Stütze (27, 33) und auf einer zweiten Stütze (31, 33) anordnet,
- und als erste und zweite Stützen erste und zweite identische Stützen (33) verwendet, die jeweils mit den ersten und zweiten Positionierungsmitteln (27a, 31 a) versehen sind.

3. Verfahren nach Anspruch 1 oder Anspruch 2, **dadurch gekennzeichnet, daß** man während des Schrittes a) einen ersten und zweiten identischen Luftschlauch realisiert und der elastische Leitungsteil (die elastischen Leitungsteile) vorzugsweise an den ersten und/oder den zweiten Luftschlauch (die Luftschläuche) mittels eines steifen Anschlusses (25) angeschlossen wird (werden) nach einem Schritt des Abformens oder miteinander Formens der Luftschläuche mit den elastischen Leitungsteilen in einer selben Form.

4. Verfahren nach Anspruch 1 oder nach Anspruch 2, **dadurch gekennzeichnet, daß** der elastische Leitungsteil (die elastischen Leitungsteile) (11) mit dem ersten und/oder dem zweiten Luftschlauch (5, 5') mittels eines Kugelkopfes (53) verbunden ist (sind).

5. Verfahren nach einem der vorhergehenden Ansprüche, **dadurch gekennzeichnet, daß** man während des Schrittes a) Teile einer elastischen Leitung (elastischer Leitungen) (11) verwendet, die eine Zone aufweisen, die zugleich in der Verlängerung als auch in der Winkelausrichtung verformbar ist.

6. Verfahren nach einem der vorhergehenden Ansprüche, **dadurch gekennzeichnet, daß**:
- man die ersten bzw. zweiten Positionierungsmittel (27a, 31 a) auf einer ersten Stütze (27, 33) und auf einer zweiten Stütze (31, 33) anordnet,
- und mindestens eine der ersten und zweiten Stützen (27, 31; 33) durch Formen in einem einzigen Stück mit dem ersten und/oder dem zweiten Luftschlauch (Luftschläuchen) realisiert ist.

7. Verfahren nach einem der vorhergehenden Ansprüche, **dadurch gekennzeichnet, daß** die Armaturenbretter dazu bestimmt sind, die innere Fahrgastkabine von zwei unterschiedlichen Kraftfahrzeugen auszustatten, mit jeweils einem Gehäuse (17, 130),
man einen ersten und einen zweiten Armaturenbrettkörper (1, 10) realisiert, die voneinander unterschiedlich und geeignet sind, die ersten bzw. zweiten Hauben (7, 7') aufzunehmen, die über ihnen befestigt sind, welche dazu bestimmt sind, an der Vorderfront der Fahrgastkabine (13) angeordnet zu werden,
man während des Schrittes a) die ersten und zweiten Luftschläuche (5, 5') realisiert, damit sie jeweils identische Befestigungszonen (45) aufweisen, welche eine unterschiedslose Befestigung an dem ersten und zweiten Armaturenbrettkörper (3, 3') erlauben,
man die ersten und zweiten Luftschläuche (5, 5') an dem ersten bzw. zweiten Armaturenbrettkörper mindestens an einigen Stellen der Befestigungszonen (45) befestigt,
man dann jeden Zusammenbau der ersten und zweiten Armaturenbrettkörper und der Luftschläuche mit der ersten bzw. zweiten Haube (7, 7') sowie an dem Gehäuse (17, 130) jedes Fahrzeuges befestigt.

## Claims

1. A method for producing two fascias (1, 10) using two ventilation structures (5, 5') which are common at least in part, comprising the following steps:
a) producing a first (5) and a second (5') ventilation structures, each comprising at least one pliable duct portion (11) identical between one ventilation structure and the other,
b) producing a first fascia cover (7) having at least one first air vent (9a) and a second fascia cover (7'), different from the first, and having at least one second air vent (9'a), **characterized in that** it further includes the following steps :
c) positioning in an assembly position said at least one pliable duct portion (11) of the first ventilation structure by way of first positioning means (27a) and assembling said at least one pliable duct portion (11) of the first ventilation structure (5) and said at least one first air vent (9a),
d) positioning in an assembly position said at least one pliable duct portion (11) of the second ventilation structure by way of second positioning means (31a) distinct from the first and assembling said at least one pliable duct portion of the second ventilation structure and said at least one second air vent (9a, 9'a).

2. The method according to claim 1, **characterized in that**, in order to position said at least one pliable duct portion during steps c) and d) :
- said first and second positioning means (27a, 31a) are respectively disposed on a first lug (27, 33) and a second lug (31, 33), and
- first and second identical lugs (33) each provided with said first and second positioning means (27a, 31a) are used as first and second lugs.

3. The method according to claim 1 or claim 2, **characterized in that**, during step a), a first and a second identical ventilation structures are produced and preferably said at least one pliable duct portion is connected to at least one of the first and the second ventilation structures by way of a rigid connection (25), subsequent to a step comprising one of an over-moulding step and a co-moulding step in a same mould, of the ventilation structures with the pliable duct portions.

4. The method according to claim 1 or claim 2, **characterized in that** said at least one pliable duct portion (11) is connected to at least one of the first and the second ventilation structures (15, 5') by way of a ball-and-socket joint (53).

5. The method according to anyone of preceding claims, **characterized in that**, during step a), said at least one pliable duct portion (11) is used which has an area deformable both in elongation and in angular orientation.

6. The method according to anyone of preceding claims, **characterized in that**:
- the first positioning means and the second positioning means (27a, 31a) are respectively provided on a first lug (27, 33) and a second lug (31, 33), and
- at least one of the first and second lugs (27, 31 ; 33) is produced by moulding, in one piece, with at least one of the first and the second ventilation structures.

7. The method according to anyone of preceding claims, **characterized in that** said fascias are intended to equip the interior passenger compartment of two different motor vehicles, each comprising a body (17, 130),
- a first and a second fascia body (1, 10) are produced which are different from each other and adapted to receive, fixed over them, respectively the first and second covers (7, 7'), which are intended to be disposed on the façade of the passenger compartment (13),
- during step a), the first and second ventilation structures (5, 5') are produced so that they each have identical fixing areas (45) allowing them to be fixed irrespectively to said first and second fascia bodies (3, 3'),
- the first and second ventilation structures (5, 5') are fixed respectively to the first and second fascia bodies, at the location of at least some of said fixing areas (45),
- then each assembly of the first and second fascia bodies and ventilation structures are fixed respectively to the first and second covers (7, 7'), and also to the body (17, 130) of each vehicle.
